# EUROPÄISCHE PATENTSCHRIFT

(11) **EP 1 519 983 B1**
(45) Veröffentlichungstag und Bekanntmachung des Hinweises auf die Patenterteilung: **23.04.2014**
(21) Anmeldenummer: 03761555.6
(22) Anmeldetag: 30.06.2003
(51) Int. Cl.: C08J 5/18, C08L 67/03, C08G 63/193, H04R 7/00

(54) **MEMBRANEN AUS POLYARYLAT-GIESSFOLIEN**
MEMBRANES MADE OF CAST POLYARYLATE FILM
MEMBRANES EN FILMS DE POLYARYLATE COULES

(30) Priorität: 28.06.2002 EP 02014418
(43) Veröffentlichungstag der Anmeldung: 06.04.2005
(73) Patentinhaber: Lofo High Tech Film GmbH, 79576 Weil am Rhein (DE)
(72) Erfinder: NICK, Jürgen, 79395 Neuenburg (DE); SIEMANN, Ulrich, 79576 Weil am Rhein (DE)
(74) Vertreter: Maucher Börjes Jenkins
(86) Internationale Anmeldenummer: PCT/EP2003/006905
(87) Internationale Veröffentlichungsnummer: WO 2004/003062

(56) Entgegenhaltungen:
- EP-A- 0 371 425
- EP-A- 0 488 221
- EP-A- 1 001 282
- US-A- 4 746 472
- PATENT ABSTRACTS OF JAPAN vol. 018, no. 313 (C-1212), 15. Juni 1994 (1994-06-15) & JP 06 065487 A (TEIJIN LTD), 8. März 1994 (1994-03-08)

## Beschreibung

Die Erfindung betrifft die in den Ansprüchen, die hier durch Bezugnahme aufgenommen werden, genannten Erfindungsgegenstände, nämlich tiefgezogene Membranen aus Polyarylat-Giessfolien (PAR-Giessfolien), insbesondere deren Verwendung als tiefgezogene Mikrofon- oder Lautsprechermembranen, sowie die entsprechenden PAR-Giessfolien, Verfahren zur Herstellung von tiefgezogenen (insbesondere Mikrofon- oder Lautsprecher-)Membranen und Verfahren zur Herstellung der PAR-Folien. Für Referenzzwecke offenbart werden Giesslösungen zur Herstellung der PAR-Giessfolien.

EP 0 288 221 A offenbart die Verwendug von Polyarylatfolien für die Herstellung optischer Folien, EP 0 371 425 Tiefziehverfahren für die Herstellung von Formteilen.

Für die Herstellung von kleinen Membranen mit einem Durchmesser von bis zu ca. 10 cm für akustische Anwendungen (Signalwandler) zum Einsatz in mobilen Geräten wie Mikrofonen, Mobiltelefonen, Laptops, Personal Digital Assistants (PDAs), Kopfhörern, oder als Signalgeber, z.B. in der Autoindustrie, werden bislang Polymerfolien, unter anderem aus Polycarbonaten (PC), Polyestern (PET, PEN), Polyethersulfonen (PES) und Polyetherimiden (PE), verwendet. Um die schwingende Masse der Membranen zu reduzieren, eine exakte Ausbildung von Prägestrukturen beim Tiefziehen zu gewährleisten und eine weitere Miniaturisierung zu ermöglichen, sollen die Folien möglichst dünn sein. Folien aus den genannten Kunststoffen sind mechanisch sehr widerstandsfähig, haben aber den Nachteil, dass sie bei der Verwendung als Lautsprechermembranen einen "metallischen" Klang erzeugen oder sich für die Ausbildung komplizierterer Prägestrukturen nicht ausreichend verformen lassen. Als Folge davon werden Musik- und/oder Sprachsignale bei der Wandlung in elektrische Signale und umgekehrt nachteilig verändert.

Die Herstellung von kleinen Mikrofon- und Lautsprechermembranen in den genannten Anwendungsbereichen erfolgt üblicherweise im Tiefziehverfahren. Hierbei wird die Folie zum Erweichen vor dem Tiefziehen aufgeheizt, beispielsweise durch Bestrahlung mit Infrarotlicht (IR). Eine gleichmässige Erwärmung und daraus resultierend eine gleichmässige Erweichung besonders dünner Folien vor dem Tiefziehprozess ist technisch umso schwerer beherrschbar, je anisotroper die Folie ist. Giessfolien sind deutlich isotroper als gereckte und/oder extrudierte Folien. Folien aus extrudiertem PC, Polyethylennaphthalat (PEN) oder Polyethylenterephthalat (PET) neigen zu mehr oder weniger starken Verformungen und/oder zur Schrumpfung, da sich während des Aufheizens die durch das Extrudieren/Recken aufgebaute innere Spannung teilweise wieder abbaut. Besonders geeignet für die genannten Anwendungsbereiche sind dünne Giessfolien, die weniger innere Spannungen aufweisen als extrudierte/gereckte Folien und sich gleichmässiger tiefziehen lassen. Speziell bei PET und PEN ist die Herstellung von Giessfolien wegen der schlechten Löslichkeit dieser Polymere aber nicht möglich.

Aufgabe der Erfindung war es, Folien für die Herstellung von Membranen für akustische Anwendungen bereitzustellen. Diese Membranen sollen darüber hinaus eine gute Sprachverständlichkeit und die Wiedergabe von Musik in guter Qualität und ausreichender Lautstärke ermöglichen und eine hohe mechanische Stabilität bei hoher Temperatur aufweisen.

Wegen der hohen Qualitätsanforderungen, besonders an kleine Membranen für akustische Anwendungen, sollten sich auch sehr dünne Folien gleichmässig mit IR erwärmen und problemlos tiefziehen lassen.

In den vergangenen Jahren wurden Membranen auf der Basis von Folien überwiegend aus extrudierten Folien hergestellt. Lediglich bei der Herstellung qualitativ hochwertiger Lautsprechermembranen kamen auch Giessfolien aus Polycarbonaten zum Einsatz.

Überraschenderweise hat es sich nun gezeigt, dass Membranen aus PAR-Giessfolien deutlich bessere akustische Eigenschaften aufweisen als Membranen, die beispielsweise aus extrudierten PC-, PEN- oder PEI-Folien hergestellt wurden. Auch gegenüber PC-Giessfolien ergeben sich deutliche Vorteile.

PAR-Giessfolien, die sich bekanntermassen durch sehr gute optische isotrope Eigenschaften und hohe Temperaturbeständigkeit auszeichnen, wurden bislang ausschliesslich für optische Anwendungen verwendet (EP-A-0488221, JP-A-08/122526, JP-A-08/134336 und JP-A-08/269214).

Bei der Ermittlung von Festigkeiten vieler Werkstoffe kann eine hohe Streuung der Messwerte festgestellt werden, die auf der herstellungsbedingten Verteilung von Fehlern im Material beruht. Um eine zuverlässige Aussage über die Festigkeit eines Materials, und damit auch zur Fehlerverteilung in diesem Material, machen zu können, ist die Kenntnis nicht nur des Mittelwertes der gemessenen Spannungen (Maximalspannung, Reissspannung), sondern auch der statistischen Verteilung der Festigkeiten erforderlich. Eine bewährte statistische Methode beruht auf der Extremwertverteilung nach Weibull, W. (Ing. Vetenskaps Akad. Handl., 151 (1939) 1-45), die die Wahrscheinlichkeit angibt, dass eine Probe gegebener Geo-metrie unter der Spannung σ versagt. Die beiden relevanten Spannungswerte, die Maximalspannung, d.h. die Spannung, bei der ein steiler Spannungs- und damit Festigkeitsabfall einsetzt, und die Reissspannung, d.h. der letzte gemessene Spannungswert vor der vollständigen Materialtrennung, stehen in unmittelbarem Zusammenhang mit dem endgültigen Materialversagen.

Die Verbesserung der Materialeigenschaften bezüglich Maximalspannung und Reissfestigkeit der erfindungsgemässen PAR-Giessfolie gegenüber PC-Giessfolien (PC-A und PB-B) aus zwei unterschiedlichen Qualitäten von Polycarbonaten, konnte durch Untersuchung von jeweils 40 Proben gezeigt werden (siehe Beispiel 12).

Weiterhin wurde gefunden, dass PAR-Giessfolien einen hohen Dämpfungsfaktor und weitgehend lineare akustische Eigenschaften über einen grossen Frequenz- und Lautstärkebereich aufweisen und sich deshalb für akustische Anwendungen nutzen lassen. Membranen aus PAR-Giessfolien weisen ein hervorragendes Ein- und Ausschwingverhalten und ein gleichmässiges Schwingungsverhalten über einen grossen Frequenz- und Lautstärkebereich auf und ermöglichen eine gute Sprachverständlichkeit.

Es wurde gefunden, dass sich gefärbte PAR-Giessfolien sehr gleichmässig erwärmen und tiefziehen lassen und sich daher für die Herstellung von kleinen Membranen besonders gut eignen.

Weiterhin wurde gefunden, dass sich der Zusatz von bestimmten Farbstoffen oder von nicht-ionischen Tensiden günstig auf störende thixotrope Eigenschaften der PAR-Giesslösungen auswirkt. Hierdurch vereinfachen sich die technischen Massnahmen vor und während des Giessvorganges erheblich und das Giessverfahren kann gesamthaft entscheidend verbessert werden.

Fertig geformte Membranen aus PAR haben eine erhöhte Temperaturbeständigkeit

(T_{g} = 188° C) gegenüber solchen aus PC (Tg = 135° C). Membranen aus PAR-Giessfolien sind wegen ihrer geringen Schrumpfneigung und Formstabilität bei erhöhter Temperatur gegenüber Membranen aus extrudierten PC-, PEI-, PEN-, PES- oder PET-Folien überlegen. Weiterhin lassen sich aus PAR-Folien Membranen mit komplizierteren Geometrien herstellen als mit extrudierten und gereckten Folien, beispielsweise aus PC-, PEI- oder PEN-Folien.

Wegen ihrer hohen Isotropie werden PAR-Giessfolien vorzugsweise als ungereckte Folien zur Membranherstellung eingesetzt. Die erfindungsgemässen PAR-Giessfolien können aber gegebenenfalls vor der Membranherstellung auch mono- oder biaxial gereckt werden.

Darüber hinaus sind aus PAR hergestellte Membranen bereits ohne Additive, die Einflüsse auf das Schwingungsverhalten haben können, schwer entflammbar.

Es wurde auch gefunden, dass Membranen aus PAR-Folien eine erhöhte Beständigkeit gegen Feuchtigkeit aufweisen.

Gemäss Anspruch 1 werden tiefgezogene Membranen für akustische Anwendungen hergestellt aus PAR-Giessfolien, die mindestens ein Polyarylat mit einer Struktureinheit der Formel 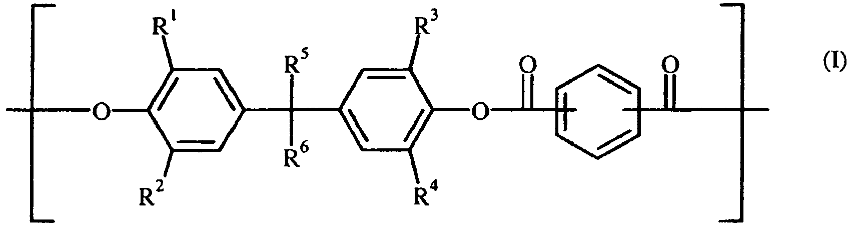 enthalten, worin R¹, R², R³ und R⁴ jeweils unabhängig voneinander Wasserstoff, C₁₋₄-Alkyl, C₁₋₄-Alkoxy oder Halogen sind und worin R₅ und R₆ jeweils unabhängig voneinander Wasserstoff, C₁₋₄-Alkyl, C₁₋₄-Alkoxy, Phenyl oder Halogen sind, wobei die Polyarylat-Giessfolien aus Polyarylat-Giesslösungen hergestellt sind, die
(i) ein nicht-ionisches Polyol-Tensid ausgewählt aus der Gruppe bestehend aus Poly(ethylenglykol), Poly(propylenglykol), und Poly(tetramethylenoxid) als Homopolymere, Copolymere oder als Gemisch davon, als Gemisch mit einem Farbstoff oder
(ü) ein nicht-ionisches Polyol-Tensid wie gerade definiert,
wobei die nicht-ionischen Polyoltenside und die Farbstoffe jeweils weitere Zusätze enthalten können, enthalten.

In einer bevorzugten Ausführung sind R¹ = R² und R³ = R⁴ und repräsentieren unabhängig voneinander Wasserstoff oder C₁₋₄-Alkyl.

In einer besonders bevorzugten Ausführung sind R¹ = R² = R³ = R⁴ und repräsentieren Wasserstoff oder C₁₋₄-Alkyl.

In einer weiteren bevorzugten Ausführung repräsentieren R⁵ und R⁶ unabhängig voneinander C₁₋₄-Alkyl. In einer besonders bevorzugten Ausführungsform sind R⁵ = R⁶ = Methyl.

Polyarylate mit R¹ = R² = R³ = R⁴ = Wasserstoff und R⁵ = R⁶ = Methyl und einer Molmasse im Bereich von 10.000-150.000 können beispielsweise von UNITIKA CHEMICAL K.K., 3-11, Chikkoshin-machi, Sakai-shi, Osaka 592, Japan unter der Bezeichnung "U-Polymer 100" bezogen werden.

Die erfindungsgemässen Membranen können eine Stärke von 5 bis 200 µm, vorzugsweise von 5 bis 100 µm und besonders bevorzugt von 10 bis 50 µm aufweisen.

Erfindungsgemäss eignen sich PAR-Folien wegen ihrer ausgezeichneten Dämpfungseigenschaften (internal loss) besonders gut für die die Herstellung von tiefgezogenen Membranen als Schallwandler für akustische Anwendungen, vorzugsweise als Mikrofon- und/oder Lautsprechermembranen. Sie weisen weniger "metallische" Klangeigenschaften auf als bekannte Membranen aus anderen Polymeren.

Die mechanische Belastbarkeit der erfindungsgemässen PAR-Membranen gegenüber PC-Membranen ist deutlich verbessert und führt bei elektrischer Ansteuerung mit gleicher Nennleistung bei erhöhter Temperatur zu einer längeren Lebensdauer.

Die erfindungsgemässen tiefgezogenen PAR-Membranen eignen sich besonders bei hohen Anforderungen an Sprachverständlichkeit, wie beispielsweise beim Einsatz als Mikrofon- und Lautsprechermembranen in Mikrofonkapseln, Mobiltelefonen, Freisprechanlagen, Funkgeräten, Hörgeräten, Kopfhörern, Kleinstradios, Computern und PDAs. Ein weiteres Einsatzgebiet ist die Verwendung als Signalgeber.

Im Folgenden sind alle %-Angaben von Farbstoff- und Tensidmengen als Gewichtsprozente bezogen auf den Feststoffanteil in den PAR-Giesslösungen und/oder daraus hergestellter PAR-Giessfolien zu verstehen.
Im Folgenden sind alle %-Angaben von Polyarylatmengen als Gewichtsprozente bezogen auf das Gesamtgewicht zu verstehen.

Für die Herstellung von erfindungsgemässen Membranen aus PAR-Giessfolien nach Anspruch 1, beispielsweise mittels Tiefziehen, werden die Folien zur besseren Verformbarkeit mit Infrarot-Licht (IR) bestrahlt und dadurch erwärmt. Dabei hat sich der Zusatz eines Farbstoffes als vorteilhaft erwiesen, weil dadurch eine gleichmässige Wärmeaufnahme und Erweichung erreicht wird. Dadurch lassen sich die erfindungsgemässen PAR-Giessfolien besser verarbeiten und die Qualität der daraus hergestellten Membranen wird verbessert.

0,01 % eines handelsüblichen Farbstoffes wie beispielsweise "C.I. Solvent Yellow 93" oder "Macrolex^{®} Orange R" sind für eine gleichmässige Erwärmung erfindungsgemässer PAR-Giessfolien bereits ausreichend. Bei Verwendung von reinen Pigmenten ohne Hilfs- und/oder Füllstoffe, kann die Farbstoffmenge noch weiter reduziert werden.

Der Farbstoff "C.I. Solvent Yellow 93" ist beispielsweise unter dem Handelsnamen "Transparent Yellow 3G" erhältlich von BAYER, Deutschland, von KUNSHAN FAR EAST CHEMICAL COMPANY, Ltd., South of Bingxi Town, Kunshan, Jiangsu 215334, PR China, von CHINA CHEMICALS, Luxun Mansion 12 FI./ Suite G, 568 Ou Yang Road, Shanghai 200081, PR China sowie von HONGMENT CHEMICALS LIMITED, Xinzhuhuayuan 32-203, Ningxi Road, Zhuhai, PR China.

Ein zu "C.I. Solvent Yellow 93" äquivalenter Farbstoff, "BASF Thermoplast Yellow 104", ist erhältlich von BASF, Deutschland, oder unter der Bezeichnung "Solvent Yellow 202" von ZHUHAI SKYHIGH CHEMICALS Co., Ltd., 20/F., Everbright International Trade Centre, Zhuhai City, Guangdong Province, PR China.

"Macrolex^{®} Orange R" kann beispielsweise von BAYER, Deutschland bezogen werden.

Die genannten Farbstoffe enthalten in ihren derzeit erhältlichen Handelsformen unter anderem nicht-ionische Polyol-Tenside, deren vorteilhafte Auswirkungen auf erfindungsgemässe PAR-Giesslösungen weiter unten beschrieben werden.

Erfindungsgemässe PAR-Giesslösungen und/oder daraus hergestellte PAR-Giessfolien enthalten mindestens einen der genannten Farbstoffe und/oder ein nicht-ionisches Polyol-Tensid.

Allgemein werden unter nicht-ionischen Polyol-Tensiden nicht-ionisches wasserlösliches Poly(ethylenoxid) oder Poly(ethylenglykol) (PEO), Poly(propylenoxid) oder Poly(propylenglykol) (PPO) und Poly(tetramethylenoxid) (PTMO) mit der gemeinsamen Struktureinheit -[(CH₂)ₓ-CHR-O]- verstanden, worin (i) R = H, x = 1 (Poly(ethylenglykol), (PEO)); (ii) R = CH₃, x = 1 (Poly(propylenglykol), (PPO)); oder (iii) R = H, x = 3 (Poly(tetramethylenoxid), (PTMO)) sein kann. Neben PEO-, PPO- und PTMO-Homopolymeren werden unter Polyol-Tensiden auch deren Copolymere, insbesondere Block-Copolymere und/oder Polymergemische davon, mit einem mittleren Molekulargewicht unter 20.000 verstanden.

Handelsübliche Poly(ethylenglykol)-Poly(propylenglykol)-Block-Copolymere sind beispielsweise "Pluronic^{®} PE 6800" von BASF oder "Synperonic^{®} F86 pract." von SERVA.

Giesslösungen aus PAR der Formel (I) in Methylenchlorid, worin R¹, R², R³, R⁴ jeweils unabhängig voneinander Wasserstoff, C₁-₄-Alkyl, C₁₋₄-Alkoxy oder Halogen bedeuten und worin R₅ und R₆ jeweils unabhängig voneinander Wasserstoff, C₁₋₄-Alkyl, C₁₋₄-Alkoxy, Phenyl oder Halogen sein können, weisen eine starke Thixotropie auf und sind als gebrauchsfertige Lösungen ohne Bewegung nicht lagerfähig. Damit sich die Giesslösungen in den Lagerbehältern, dem Fördersystem, den Filtern oder der Giessapparatur nicht gelartig verfestigen können, müssen umfangreiche Vorkehrungen zur Gewährleistung von ständiger Bewegung sowie zur Vermeidung von "toten Winkeln" getroffen werden.

Überraschend hat sich gezeigt, dass der Zusatz eines Farbstoffes wie beispielsweise "C.I. Solvent Yellow 93", "Solvent Yellow 202" oder "Macrolex^{®} Orange R" zu den PAR-Giesslösungen als Anti-Thixotropiemittel wirkt.

Weitere Prüfungen haben gezeigt, dass nicht-ionische Polyol-Tenside wie beispielsweise Poly(ethylenglykol)-Poly(propylenglykol)-Block-Copolymere diesen Effekt auch alleine bewirken. PAR-Giesslösungen, welchen einer der genannten Farbstoffe und/oder nicht-ionischen Polyol-Tenside zugesetzt wird, weisen keine thixotropen Eigenschaften mehr auf. Der Giessprozess wird dadurch erheblich vereinfacht und die erfindungsgemässen gebrauchsfertigen PAR-Giesslösungen sind wochenlang lagerfähig. PAR-Giesslösungen ohne Tensid- und/oder Farbzusatz, die ohne Bewegung gelagert werden, büssen ihre Gebrauchsfähigkeit dagegen bereits nach wenigen Stunden vollständig ein (siehe Beispiel 11).

Die genannten Farbstoffe und nicht-ionischen Polyol-Tenside können weitere Zusätze wie beispielsweise TiO₂ enthalten.

Erfindungsgemässe PAR-Giesslösungen und/oder daraus hergestellte PAR-Giessfolien enthalten einen Farbstoff und ein nicht-ionisches Polyol-Tensid oder ein nicht-ionisches Polyol-Tensid, jeweils wie oben definiert.

In einer besonderen Ausführungsform enthalten erfindungsgemäss verwendete PAR-Giesslösungen und daraus hergestellte erfindungsgemässe PAR-Giessfolien mindestens ein nicht-ionisches Tensid, ausgewählt aus der Gruppe bestehend aus Poly(ethylenglykol), Poly(propylenglykol) und Poly(tetramethylenoxid), wobei die genannten Tenside als Homopolymere, Copolymere, wie Block-Copolymere einzeln oder als Gemisch verwendet werden können.

In einer besonders bevorzugten Ausführung enthalten erfindungsgemäss verwendete PAR-Giesslösungen und daraus hergestellte erfindungsgemässe PAR-Giessfolien mindestens ein Polyethylen-Polypropylen-Block-Copolymer mit einem mittleren Molgewicht von 6.000 bis 10.000.

In einer besonders bevorzugten Ausführung enthalten erfindungsgemäss verwendete PAR-Giesslösungen und daraus hergestellte erfindungsgemässe PAR-Giessfolien einen Farbstoff wie beispielsweise "C.I. Solvent Yellow 93", "Solvent Yellow 202" oder "Macrolex^{®} Orange R" und/oder ein nicht-ionisches Polyol-Tensid wie beispielsweise "Pluronic^{®} PE 6800" oder "Synperonic^{®} F86 pract." (siehe Ansprüche für die entsprechenden C.I. Namen).

Erfindungsgemäss verwendete PAR-Giesslösungen und daraus hergestellte erfindungsgemässe PAR-Giessfolien enthalten PAR der Formel (I) gemäss Anspruch 1 sowie einen Farbstoff und ein nicht-ionisches Polyol-Tensid oder ein nicht-ionisches Polyol-Tensid, jeweils wie in den Ansprüchen definiert, in einer Menge von 0,001 bis 2 %, vorzugsweise in einer Menge von 0,001 bis 0,15 %.

Der Farbstoff und/oder das nicht-ionisches Polyol-Tensid können beispielsweise in Aceton, Butylacetat oder Methylenchlorid, besonders bevorzugt in Methylenchlorid gelöst werden.

In einer bevorzugten Ausführung enthält der Farbstoff wie beispielsweise "C.I. Solvent Yellow 93", "Solvent Yellow 202" oder "Macrolex^{®} Orange R" bereits ein nicht-ionisches Polyol-Tensid wie beispielsweise "Pluronic^{®} PE 6800" oder "Synperonic^{®} F86 pract." und kann als Gemisch mit diesem gelöst werden.

Bevorzugt wird der PAR-Giesslösung der Farbstoff und/oder das nicht-ionische Polyol-Tensid als Lösung in Methylenchlorid bis zur gewünschten Menge zudosiert.

In einer weiteren bevorzugten Ausführung wird der Farbstoff und das nicht-ionische Polyol-Tensid oder das nicht-ionische Polyol-Tensid bereits in dem als Lösungsmittel für die Herstellung der PAR-Giesslösungen verwendeten Methylenchlorid gelöst.

Geeignete Konzentrationen für die erfindungsgemäss verwendeten PAR-Giesslösungen in Methylenchlorid reichen von 10 % bis zur Löslichkeitsgrenze. Bevorzugt liegen sie im Bereich von 15 bis 25 %, besonders bevorzugt im Bereich von 20 bis 24 %.

Die Herstellung der Membranen kann erfolgen, indem die PAR-Folien im aufgeheizten und erweichten Zustand mittels Tiefziehen in einer Tiefziehform verformt werden. Dies kann beispielsweise durch Anwendung von Luftdruck oder Vakuum oder mit einem mechanischen Stempel erfolgen. Die Tiefziehverfahren können auch miteinander kombiniert eingesetzt werden.

Der Aufheizvorgang erfolgt vorzugsweise durch Bestrahlung mit Infrarotlicht.

Die fertig geformten Membranen können anschliessend mittels eines mechanischen

Verfahrens, beispielsweise mit einem Messer oder einer Stanze, oder berührungslos, beispielsweise mit Hilfe eines Wasserstrahls oder eines Lasers aus der Folie ausgeschnitten werden. Vorzugsweise werden die geformten Membranen ausgestanzt oder mit einem Laser geschnitten.

Anschliessend können die Membranen am äusseren Umfang mit einem Trägerring aus Kunststoff oder Metall und mit einer Spule mit Anschlusskontakten verbunden und als Mikrofon- oder Lautsprechermembran zusammen mit einem Permanentmagneten in entsprechende Vorrichtungen zur Umwandlung oder Erzeugung akustischer Signale eingebaut werden.

Zur Herstellung von Polyarylat-Giessfolien werden die erfindungsgemässen Polyarylat-Giesslösungen mittels eines geeigneten Giessers auf einen Träger aufgebracht, nach einer Vortrockenzeit von diesem Träger abgezogen und anschliessend vollständig getrocknet.

In einer besonderen Ausführungsform wird der Giessfilm mittels eines geeigneten Giessers oder einer Rakel (doctor blade) auf eine Glasunterlage aufgebracht, vorgetrocknet, abgezogen und bis zur gewünschten Restkonzentration an Lösungsmittel endgetrocknet.

In einer weiteren bevorzugten Ausführungsform wird der Giessfilm mittels eines geeigneten Giessers auf einen Endlosträger aufgebracht, vorgetrocknet, abgezogen und bis zur gewünschten Restkonzentration an Lösungsmittel endgetrocknet.

In einer bevorzugten Ausführungsform ist der Endlosträger ein einseitig poliertes oder mattiertes Stahlband von 20 bis 100 m Länge oder eine polierte oder mattierte Edelstahlwalze von 5 bis 25 m Umfang.

Besonders bei sehr dünnen Folien mit Folienstärken von <20 µm kann es zur Erhöhung der Stabilität der erfindungsgemässen Giessfolien und zur Vermeidung von Spannungsdehnungen während der Weiterverarbeitung dieser Folien vorteilhaft sein, den Giessfilm nicht direkt auf einem der genannten Träger, sondern auf eine Zwischenfolie aufzubringen, welche auf dem eigentlichen Träger geführt wird. Diese Zwischenfolie kann dann nach der beschriebenen Vortrockenzeit zusammen mit dem Giessfilm vom eigentlichen Träger abgezogen werden und der Giessfilm wie beschrieben endgetrocknet werden. Dabei ist es unerheblich, ob und wann die erfindungsgemässe Giessfolie von der Zwischenfolie getrennt wird. Vorzugsweise wird die Zwischenfolie zusammen mit der erfindungsgemässen Giessfolie auf Rollen gewickelt und dann weiterverarbeitet.

In einer bevorzugten Ausführungsform wird als Zwischenfolie eine Polymerfolie, besonders bevorzugt eine PET-Folie verwendet.

In einer bevorzugten Ausführungsform erfolgt die Vortrocknung bis zum Abziehen des vorgebildeten Films direkt durch Infrarot- oder Mikrowellenbestrahlung, elektrische Heizung oder indirekt durch Beaufschlagung mit erwärmter Luft.

In einer bevorzugten Ausführungsform hat die PAR-Folie nach dem Abziehen einen Lösungsmittelgehalt von 5 bis 15 %. In einer weiteren bevorzugten Ausführungsform erfolgt die Endtrocknung bis zur gewünschten Restkonzentration an Lösungsmittel in einem beheizbaren Nachtrockenschrank (drying cabinet) durch direkte und/oder indirekte Heizung. Besonders bevorzugt erfolgt die Endtrocknung freitragend.

Die Heizung kann direkt durch Infrarot- und/oder Mikrowellenheizung und/oder indirekt durch die Beaufschlagung mit temperierter Luft erfolgen.

In einer bevorzugten Ausführungsform wird die PAR-Folie mit einer Geschwindigkeit von 1 bis 20 m/min, vorzugsweise bei 2 bis 5 m/min transportiert. Hierbei kann die Endtrocknung bei einer Temperatur im Bereich von 50 bis 200 °C durchgeführt werden. Nach der Endtrocknung hat die erfindungsgemässe PAR-Folie eine durchschnittliche Stärke von 5 bis 200 µm und einen Lösungsmittelgehalt von unter 1,5 %.

Die Eigenschaften der erfindungsgemässen PAR-Giessfolien lassen sich durch Beschichtungen noch weiter optimieren. Solche Beschichtungen können beispielsweise aus einer Lösung aufgetragen oder als Folie bzw. Schicht auflaminiert werden. In einer weiteren Ausführungsform können solche Beschichtungen wegen der hohen Temperaturbeständigkeit der PAR-Folie auch als Extrusionsbeschichtung vorgenommen werden. Durch die Beschichtung können z. B. die Dämpfungseigenschaften weiter verbessert werden.

Die Lösungsbeschichtung kann beispielsweise mittels Walzenauftrag, Rakelauftrag oder Sprühauftrag erfolgen. Für die Lösungsbeschichtung eignen sich beispielsweise

Lösungen von Polyurethanen (PUR) oder Acrylaten in geigneten Lösungsmitteln.

Für die Laminierbeschichtung eignen sich Folien aus PE, PP oder PUR. Für die Laminierung können ungereckte, mono- oder biaxial gereckte Giessfolien oder extrudierte Folien verwendet werden, indem eine dauerhafte und ausreichend hohe Haftung zwischen den einzelnen Schichten beispielsweise mittels eines zusätzlichen Klebstoffauftrags (Kaschierung) oder als echte Laminierung durch Druck- und Temperaturanwendung herbeigeführt wird.

Nach der Trocknung, gegebenenfalls nach einer weiteren Beschichtung und gegebenenfalls einer Vorkonfektionierung beispielsweise durch Rollenschneiden, kann die erfindungsgemässe PAR-Giessfolie wie vorstehend beschrieben in einer Tiefziehapparatur zu Membranen weiter verarbeitet werden.

### Beispiele

Obwohl die Ausführung der vorliegenden Erfindung durch die angeführten Beispiele 1 bis 13 vollständig offenbart wird, können aufgrund der beanspruchten Variationen der Verfahrensparameter noch zahlreiche weitere erfindungsgemässe Beispiele durchgeführt werden.

### Beispiel 1 (nicht erfindungsgemäß)

Als Ansatzgrösse für die Produktion wurden 600 kg Polyarylat "U-Polymer 100" von UNITIKA der Formel (I), mit R¹ = R² = R³ = R⁴ = Wasserstoff sowie R⁵ = R⁶ = Methyl, in 2062 kg Methylenchlorid eingewogen und im Verlauf von 3 h bei Raumtemperatur und weiteren 3 h bei 39 °C unter ständigem Rühren gelöst. 300 g Farbstoff "C.I. Solvent Yellow 93" von BAYER wurden während des Rührens als Pulver zugegeben. Der Lack wies einen Feststoffanteil von 22,5 % auf.

Aus dem Lack wurden Folien mit 100 µm Filmstärke und ca. 110 cm Breite hergestellt.

### Beispiel 2 (nicht erfindugsgemäß)

Als Ansatzgrösse für die Produktion wurden 600 kg Polyarylat "U-Polymer 100" von UNITIKA der Formel (I), mit R¹ = R² = R³ = R⁴ = Wasserstoff sowie R⁵ = R⁶ = Methyl, in 2062 kg Methylenchlorid eingewogen und im Verlauf von 3 h bei Raumtemperatur und weiteren 3 h bei 39 °C unter ständigem Rühren gelöst. 300 g Farbstoff "Macrolex ^{®} Orange R" wurden während des Rührens als Pulver zugegeben. Der Lack wies einen Feststoffanteil von 22,5 % auf.

Aus dem Lack wurden Folien mit 100 µm Filmstärke und ca. 110 cm Breite hergestellt.

### Beispiel 3 (nicht erfindungsgemäß)

Als Ansatzgrösse für die Produktion wurden 300 kg Polyarylat "U-Polymer 100" von UNITIKA der Formel (I), mit R¹ = R² = R³ = R⁴ = Wasserstoff sowie R⁵ = R⁶ = Methyl, in 1100 kg Methylenchlorid eingewogen und im Verlauf von 3 h bei Raumtemperatur und weiteren 3 h bei 39 °C unter ständigem Rühren gelöst. 32 g Farbstoff "C.I. Solvent Yellow 93" von BAYER wurden während des Rührens als Pulver zugegeben. Der Lack wies einen Feststoffanteil von 21,5 % auf.

Aus dem Lack wurden Folien mit 20, 25, 30, 40, 60, 80 und 100 µm Filmstärke und ca. 110 bis 120 cm Breite hergestellt.

### Beispiel 4 (nicht erfindungsgemäß)

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten einen "C.I. Solvent Yellow 93" Farbstoffanteil von 0,01 %. Aus den Lacken wurden Handgüsse im DIN-A4-Format in einer Filmstärke von 15 bis 100 µm hergestellt.

### Beispiel 5 (nicht erfindungsgemäß)

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten einen "Macrolex^{®} Orange R" Farbstoffanteil von 0,01 %. Aus den Lacken wurden Handgüsse im DIN-A4-Format in einer Filmstärke von 15 bis 100 µm hergestellt.

### Beispiel 6

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten einen "Pluronic^{®} PE 6800" Tensidanteil von 0,01 %. Aus den Lacken wurden Handgüsse im DIN-A4-Format in einer Filmstärke von 15 bis 100 µm hergestellt.

### Beispiel 7 (nicht erfindungsgemäß)

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten einen "C.I. Solvent Yellow 93" Farbstoffanteil von 0,001 %. Aus den Lacken wurden Handgüsse im DIN-A4-Format in einer Filmstärke von 15 bis 100 µm hergestellt.

### Beispiel 8 (nicht erfindungsgemäß)

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten einen "Macrolex^{®} Orange R" Farbstoffanteil von 0,001 %. Aus den Lacken wurden Handgüsse im DIN-A4-Format in einer Filmstärke von 15 bis 100 µm hergestellt.

### Beispiel 9

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten einen "Pluronic^{®} PE 6800" Tensidanteil von 0,001 %. Aus den Lacken wurden Handgüsse im DIN-A4-Format, in einer Filmstärke von 15 bis 100 µm hergestellt.

### Vergleichsbeispiel 10

Für Handgüsse wurden 0,3 bis 2,0 kg Lacke mit einem Polymeranteil von 15 bis 24 %, durch Lösen von PAR "U-Polymer 100" von UNITIKA der Formel (I), mit R¹ = R² = R³ = R⁴ = Wasserstoff sowie R⁵ = R⁶ = Methyl, in Methylenchlorid im Verlauf von 3 h bei Raumtemperatur und weiteren 3 h bei 39 °C unter ständigem Rühren hergestellt. Die Lacke für Handgüsse enthielten keinen Farbstoff und/oder Tensidanteil. Aus den Lacken wurden Handgüsse im DIN-A4-Format in einer Filmstärke von 15 bis 100 µm hergestellt.

### Beispiel 11

Lackproben der Lacke aus den Beispielen 1 bis 9, sowie dem Vergleichsbeispiel 10 wurden zu bestimmten Zeiten nach Herstellung der gebrauchsfertigen Lösungen bezüglich ihres thixotropen Verhaltens beobachtet. Hierzu wurden Proben der Lacke jeweils in 5 verschiedene Gefässe übergeführt. Nach 30 min, 4 h, 8 h, 20 h und nach 1 bis 4 Wochen wurden, soweit möglich, Folien im Handgussverfabren hergestellt. Die Beobachtungen sind in Tabelle 1 zusammengestellt.

**Tabelle 1**

| Lack | nach 30 min | nach 4 h | nach 8 h | nach 20 h | nach 4 Wochen |
|---|---|---|---|---|---|
| Beispiel 1 | gebrauchsfähige stabile Lösung ohne Eindickung | gebrauchsfähige stabile Lösung ohne Eindickung | gebrauchsfähige stabile Lösung ohne Eindickung | gebrauchsfähige stabile Lösung ohne Eindickung | gebrauchsfähige stabile Lösung ohne Eindickung |
| Beispiel 2 | gebrauchsfähige stabile Lösung ohne Eindickung | gebrauchsfähige stabile Lösung ohne Eindickung | gebrauchsfähige stabile Lösung ohne Eindickung | gebrauchsfähige stabile Lösung ohne Eindickung | gebrauchsfähige stabile Lösung ohne Eindickung |
| Beispiel 3 | gebrauchsfähige stabile Lösung ohne Eindickung | gebrauchsfähige stabile Lösung ohne Eindickung | gebrauchsfähige stabile Lösung ohne Eindickung | gebrauchsfähige stabile Lösung ohne Eindickung | gebrauchsfähige stabile Lösung ohne Eindickung |
| Beispiele 4 bis 6 | gebrauchsfähige stabile Lösungen ohne Eindickung | gebrauchsfähige stabile Lösungen ohne Eindickung | gebrauchsfähige stabile Lösungen ohne Eindickung | gebrauchsfähige stabile Lösungen ohne Eindickung | gebrauchsfähige stabile Lösungen ohne Eindickung |
| Beispiele 7 bis 9 | gebrauchsfähige stabile Lösungen ohne Eindickung | gebrauchsfähige stabile Lösung ohne Eindickung | gebrauchsfähige stabile Lösungen ohne Eindickung | gebrauchsfähige stabile Lösungen ohne Eindickung | gebrauchsfähige stabile Lösungen ohne Eindickung |
| Vergleichsbeispiel 10 | beginnende Eindickung | starker Anstieg der Viskosität | Lösung ist gelartig und nicht mehr verwendbar | festes Gel, beim Umstülpen keine Bewegung mehr zu erkennen | festes Gel, beim Umstülpen keine Bewegung mehr zu erkennen |

### Beispiel 12

Reissspannung und Maximalspannung wurden bei jeweils 40 Folienproben mit 30 µm Dicke aus 3 unterschiedlichen Materialien (PC-B, PAR, PC-A) nach der Weibullschen Methode ausgewertet.

Die charakteristischen Parameter der Weibull-Statistik sind in Tabelle 2 zusammengefasst. Die Probe mit der Bezeichnung PAR entspricht einer erfindungsgemässen PAR-Giessfolie. PC-A und PC-B entsprechen Proben von Polycarbonat-Giessfolien. PC-A ist das gegenwärtige Standard-Polycarbonat für Lautsprechermembranen aus PC-Giessfolien. PC-B besteht aus einem PC-Vergleichsmaterial, das als Alternative zu PC-A untersucht wurde.

**Tabelle 2**

| | | Reissspannung | | | | Maximalspannung | | | |
|---|---|---|---|---|---|---|---|---|---|
| Polymer | N | *σ̅* ± Δ*σ* [MPa] | σ_{c,0} [MPa] | σₘ [MPa] | *m* | *σ̅* ± Δ*σ* [MPa] | σ_{c,0} [MPa] | σₘ [MPa] | *m* |
| PC-B | 40 | 24,9 ± 5,8 | 27,3 | 25,2 | 4,6 | 73,5 ± 3,5 | 75,1 | 74,0 | 24,9 |
| PAR | 40 | 30,9 ± 5,7 | 33,3 | 31,3 | 6,0 | 77,3 ± 3,4 | 78,8 | 77,8 | 28,3 |
| PC-A | 40 | 42,9± 8,7 | 46,6 | 43,5 | 5,3 | 85,1 ± 6,1 | 87,8 | 85,9 | 16,8 |

| | | | | | | | | | |
|---|---|---|---|---|---|---|---|---|---|
| N: Probenzahl σ̅± Δσ : arithmetischer Mittelwert mit Standardabweichung σ_{c,0}: charakteristische Festigkeit (Bruchwahrscheinlichkeit 63,2%) σₘ: Medianwert der Festigkeit (Bruchwahrscheinlichkeit 50%) *m*: Weibullmodul | | | | | | | | | |

Die Weibullmoduln *m*, die die Homogenität der Materialien charakterisieren, wobei mit steigendem *m* die Homogenität zunimmt und die Messwertstreuung geringer wird, weisen für die Maximalspannung und die Reissspannung folgende Reihung auf.
Maximalspannung: *m* (PC-A) < *m* (PC-B) < *m* (PAR)
Reissspannung: *m* (PC-B) < *m* (PC-A) < *m* (PAR)

Die erfindungsgemässe PAR-Giessfolie besitzt im Vergleich mit zwei unterschiedlichen PC-Giessfolien die geringsten Inhomogenitäten und damit auch die geringste Messwertverteilung.

### Beispiel 13

Lebensdauertest-Vergleich von Standard- und Hochleistungslautsprechertypen aus PAR-Giessfolie und PC-Giessfolie (PC-A und PC-B, siehe Beispiel 12) in Anlehnung an DIN ETS 300019 "Geräte-Entwicklung; Umweltbedingungen und Umweltprüfungen für Telekommunikationsanlagen". PAR entspricht der erfindungsgemässen PAR-Giessfolie. Getestet wurden 5 unterschiedliche Lautsprechertypen mit jeweils mindestens 50 Lautsprechern pro Typ und Membrandurchmesser. Die Lautsprecher wurden unter Belastung verschiedenen Tests wie beispielsweise mehrfaches Durchlaufen von Temperaturzyklen (-40°C bis 85°C) bei hoher Luftfeuchtigkeit oder Dauerbelastung bei 85°C unterzogen. Insgesamt wurde jeder Lautsprecher unter einer elektrischen Belastung mit "Rosa Rauschen" ("Pink Noise") bei der jeweiligen Nennleistung laut Datenblatt des jeweiligen Lautsprechers über eine Zeitspanne von 500 h getestet. Weil die Ausfallverluste zu unterschiedlichen Zeiten des Tests eintreten, werden die Ergebnisse nur qualitativ in Form von Beurteilungen wiedergegeben.

In Tabelle 5 sind die Beurteilungen zusammengefasst und geben an, ob sich die Zahl der getesteten Lautsprecher signifikant von der Zahl der Lautsprecher unterscheidet, die nach dem Test noch funktionsfähig sind. Lautsprechermembranen aus der erfindungsgemässen PAR-Giessfolie schneiden nach dem Lebensdauertest mindestens gleichwertig ab im Vergleich zum gegenwärtigen Standardmaterial.

**Tabelle 3**

| Beispiel | Membrandurchmesser | Folienstärke | Anzahl Typen | PC-B | PC-A | PAR |
|---|---|---|---|---|---|---|
| 13-1 | 13 mm | 30 µm | 4 | - | + | + |
| 13-2 | 16 mm | 40-60 µm | 3 | - | + | + |
| 13-3 | 13 mm | 30-60 µm | 8 | - | + | + |
| 13-4 | 23-38 mm | 40-150 µm | 24 | + | (+) | (+) |
| 13-5 | 28 mm | 100 µm | 1 | - | (+) | + |

| | | | | | | |
|---|---|---|---|---|---|---|
| + = Lebensdauertest mit minimalen Verlusten bestanden, (+) = Lebensdauertest mit noch tolerierbaren Verlusten eingeschränkt bestanden, - = Lebensdauertest wegen hoher Verluste nicht bestanden | | | | | | |

## Patentansprüche

1. Tiefgezogene Membranen aus Polyarylat-Giessfolien, mindestens enthaltend ein Polyarylat mit einer Struktureinheit der Formel 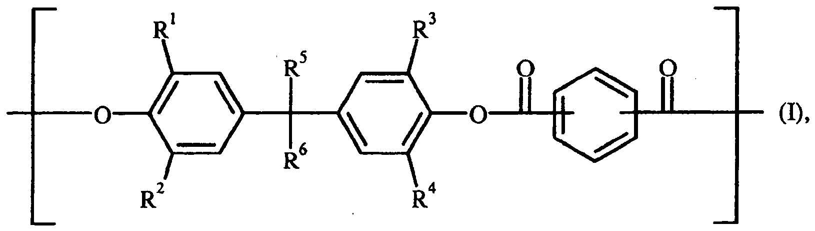 worin
R¹, R², R³, R⁴ jeweils unabhängig voneinander Wasserstoff, C₁₋₄-Alkyl, C₁₋₄-Alkoxy oder Halogen sind und worin R₅ und R₆ jeweils unabhängig voneinander Wasserstoff, C₁₋₄-Alkyl, C₁₋₄-Alkoxy, Phenyl oder Halogen sind, wobei die Polyarylat-Giessfolien aus Polyarylat-Giesslösungen hergestellt sind, die
(i) ein nicht-ionisches Polyol-Tensid ausgewählt aus der Gruppe bestehend aus Poly(ethylenglykol), Poly(propylenglykol), und Poly(tetramethylenoxid) als Homopolymere, Copolymere oder als Gemisch davon, als Gemisch mit einem Farbstoff
oder
(ii) ein nicht-ionisches Polyol-Tensid wie gerade definiert,
wobei die nicht-ionischen Polyoltenside und die Farbstoffe jeweils weitere Zusätze enthalten können,
enthalten.

2. Tiefgezogene Membranen nach Anspruch 1, **dadurch, gekennzeichnet, dass** R¹ = R² und R³ = R⁴ sind und jeweils unabhängig voneinander Wasserstoff oder C₁₋₄-Alkyl repräsentieren.

3. Tiefgezogene Membranen nach Anspruch 2, **dadurch gekennzeichnet, dass** R¹ = R²
= R³ = R⁴ sind und Wasserstoff oder C₁₋₄-Alkyl repräsentieren.

4. Tiefgezogene Membranen nach mindestens einem der Ansprüche 1 bis 3, **dadurch gekennzeichnet, dass** R⁵ und R⁶ jeweils unabhängig voneinander C₁₋₄-Alkyl repräsentieren.

5. Tiefgezogene Membranen nach mindestens einem der Ansprüche 1 bis 4 in einer Stärke von 5 bis 100 µm.

6. Tiefgezogene Membran nach Anspruch 1, wobei der Farbstoff "C.I. Solvent Yellow 93", "C.I. Solvent Yellow 16" oder "C.I. Solvent Orange 107" ist.

7. Tiefgezogene Membran nach Anspruch 1, wobei das nicht-ionische Polyol-Tensid als Polyethylenglycol-Polypropylenglycol-Block-Copolymer verwendet wird.

8. Verwendung der tiefgezogenen Membranen gemäss Ansprüchen 1 bis 7 als Membranen für Schallwandler für akustische Anwendungen als Mikrofon- und/oder Lautsprechermembranen.

9. Verwendung nach Anspruch 8 in Mikrofonkapseln, Mobiltelefonen, Freisprechanlagen, Funkgeräten, Hörgeräten, Kopfhörern, Kleinstradios, Computern, PDAs und/oder Signalgebern.

10. Polyarylat-Giessfolien aus Polyarylat der Formel (I) wie in Anspruch 1 definiert, die aus Polyarylat-Giesslösungen hergestellt sind, die
(i) ein nicht-ionisches Polyol-Tensid ausgewählt aus der Gruppe bestehend aus Poly(ethylenglykol), Poly(propylenglykol), und Poly(tetramethylenoxid) als Homopolymere, Copolymere oder als Gemisch davon, als Gemisch mit einem Farbstoff, oder
(ii) ein nicht-ionisches Polyol-Tensid wie gerade definiert,
enthalten.

11. Polyarylat-Giessfolien nach Anspruch 10, **dadurch gekennzeichnet, dass** als nicht-ionisches Polyol-Tensid Polyethylenglycol-Polypropylenglycol-Block-Copolymer und ,als Farbstoff "C.I. Solvent Yellow 93", "C.I. Solvent Yellow 16" oder "C.I. Solvent Orange 107" vorgesehen ist.

12. Verfahren zur Herstellung von tiefgezogenen Membranen gemäss den Ansprüchen 1 bis 7 aus Polyarylat-Giessfolien gemäss den Ansprüchen 10 oder 11, **dadurch gekennzeichnet, dass** die Polyarylat-Giessfolien, gegebenenfalls nach einer Vorkonfektionierung wie Rollenschneiden, durch Bestrahlung mit Infrarotlicht erwärmt, danach mittels Tiefziehen zu Membranen verformt und gegebenenfalls anschliessend konfektioniert werden.

13. Verfahren zur Herstellung von Polyarylat-Giessfolien gemäss den Ansprüchen 10 und 11 , **dadurch gekennzeichnet, dass** Polyarylat-Giesslösungen, die (i) ein nicht-ionisches Polyol-Tensid ausgewählt aus der Gruppe bestehend aus Poly(ethylenglykol), Poly(propylenglykol), und Poly(tetramethylenoxid) als Homopolymere, Copolymere oder als Gemisch davon, als Gemisch mit einem Farbstoff, oder (ii) ein nicht-ionisches Polyol-Tensid wie gerade definiert, enthalten, auf einen Träger aufgebracht, nach einer Vortrockenzeit von diesem Träger abgezogen und anschliessend vollständig getrocknet werden.

14. Verfahren nach Anspruch 13, **dadurch gekennzeichnet, dass** die Polyarylat-Giesslösungen auf einen Endlosträger wie ein einseitig poliertes oder mattiertes Stahlband oder eine polierte oder mattierte Edelstahlwalze von 5 bis 25 m Umfang aufgebracht werden.

15. Verfahren nach einem der Ansprüche 13 und 14, **dadurch gekennzeichnet, dass** die Polyarylat-Giesslösungen auf eine auf dem Träger geführte Zwischenfolie aufgebracht und nach einer Vortrockenzeit zusammen mit der Zwischenfolie von diesem Träger abgezogen, sowie anschliessend vollständig getrocknet wird.

16. Verfahren nach Anspruch 15, **dadurch gekennzeichnet, dass** als Zwischenfolie eine Polyethylenterephthalat-Folie verwendet wird.

17. Verfahren nach mindestens einem der Ansprüche 13 bis 16, **dadurch gekennzeichnet, dass** die endgetrockneten Polyarylat-Giessfolien eine durchschnittliche Stärke von 5 bis 100 µm aufweisen.

18. Verfahren nach mindestens einem der Ansprüche 13 bis 17, **dadurch gekennzeichnet, dass** die Polyarylat-Giessfolien zusätzlich durch Lösungsauftrag oder Laminierung beschichtet werden.

## Claims

1. Thermoformed diaphragms made of cast polyarylate film, at least comprising one polyarylate having a structural unit of the formula: 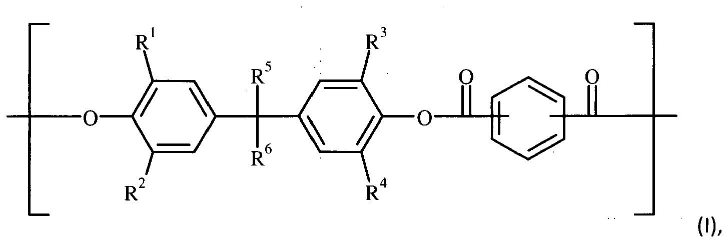 where each of R1, R2, R3, and R4, independently of the others, is hydrogen, C1-4-alkyl, C1-4-alkoxy, or halogen, and each of R5 and R6, independently of the other, is hydrogen, C1-4-alkyl, C1-4-alkoxy, phenyl, or halogen, where the cast polyarylate films are produced from polyarylate cast solutions which contain
(i) a non-ionic polyol surfactant selected from the group consisting of poly(ethylene glycol), poly(propylene)glycol, and poly(tetramethylerie oxide) utilized as homopolymer, copolymer, or a mixture of these, as a mixture with a dye,
or
(ii) a non-ionic polyol surfactant as just defined,
Where each of the non-ionic polyol surfactant and the dyes may contain other additives.

2. Thermoformed diaphragms as claimed in claim 1, wherein R1= = R2 and R3 = R4, and each, independently of the others, is hydrogen or C1-4-alkyl.

3. Thermoformed diaphragms as claimed in claim 2, wherein R1= R2 = R3 = R4, and each is hydrogen or C1-4alkyl.

4. Thermoformed diaphragms as claimed in at least one claim of claim 1-3, wherein each of R5 and R6, independently of the other, is C1-4-alkyl.

5. Thermoformed diaphragms as claimed in at least one claim of claim 1-4 having a thickness of from 5 to 100 µm.

6. Thermoformed diaphragms as claimed in claim 1 wherein the dye is a dye from the group "C.I. Solvent Yellow 93", "C.I. Solvent Yellow 16", or "C.I. Solvent Orange 107".

7. Thermoformed diaphragms as claimed in claim 1 wherein the non-ionic polyol surfactant is used as polyethylene-polypropylene-block-copolymer.

8. Use of the thermoformed diaphragms as claimed in claim 1-7 as diaphragms for acoustic transducers for acoustic applications as microphone diaphragms and/or loudspeaker diaphragms.

9. Use as claimed in claim 8 in microphone capsules, mobile telephones, hands-free systems, radio sets, hearing devices, headphones, microradios, computers, PDAs and/or signal generators.

10. Cast polyarylate films made of polyarylate according to formula (I) as defined in claim 1, produced from polyarylate cast solutions which contain
(i) a non-ionic polyol surfactant selected from the group consisting of poly(ethylene glycol), poly(propylene)glycol, and poly(tetramethylene oxide) utilized as homopolymer, copolymer, or a mixture of these, as a mixture with a dye, or
(ii) a non-ionic polyol surfactant as just defined.

11. Cast polyarylate films as claimed in claim 10 **characterised in that** as non-ionic polyol surfactant polyethylene-polypropylene-block-copolymer is provided and as dye "C.I. Solvent Yellow 93", "C.I. Solvent Yellow 16", or "C.I. Solvent Orange 107" is provided.

12. Process for producing thermoformed diaphragms as claimed in claims 1 to 7 from cast polyarylate films as claimed in claims 10 to 11, **characterized in that** the cast polyarylate films are heated through irradiation with infrared light, where appropriate after a preparatory process, such as roll cutting, and are then deformed by means of thermoforming to give diaphragms, and are then, where appropriate, subjected to finishing processes.

13. Process for producing cast polyarylate films as claimed in claims 10 and 11, **characterised in that** polyarylate casting solutions which contain
(i) a non-ionic polyol surfactant selected from the group consisting of poly(ethylene glycol), poly(propylene)glycol, and poly(tetramethylene oxide) utilized as homopolymer, copolymer, or a mixture of these, as a mixture with a dye, or
(ii) a non-ionic polyol surfactant as just defined
are applied to a substrate, are peeled away from this substrate after a predrying period, and are then dried fully.

14. Process as claimed in claim 13, **characterised in that** the polyarylate casting solutions are applied to a continuous substrate, such as a steel belt which is matt or polished on one side, or a to polished or matt stainless steel roll of circumference from 5 to 25 m.

15. Process as claimed in claim 13 or 14, **characterised in that** the polyarylate casting solutions are applied to an intermediate film conducted on the substrate and, after a predrying period, are peeled away together with the intermediate film from this substrate, and are then dried fully.

16. Process as claimed in claim 15, **characterised in that** the intermediate film used comprises a polyethylene terephthalate film.

17. Process as claimed in at least one of claims 13 to 16, **characterised in that** the average thickness of the cast polyarylate films after final drying is from 5 to 100 µm.

18. Process as claimed in any of claims 13 to 17, **characterised in that** the cast polyarylate films are in addition coated by a solution-application or lamination process.

## Revendications

1. Membrane emboutie en films coulés de polyarylate, contenant au
moins un polyarylate présentant une unité structurelle de formule 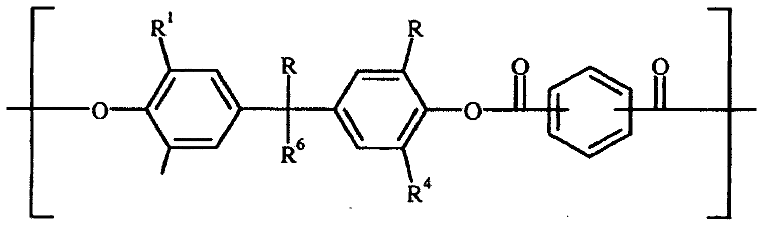 dans laquelle
R¹, R², R³, R⁴ représentent indépendamment les uns des autres l'hydrogène, un groupe alkyle en C₁₋₄, un groupe alcoxy en C₁₋₄ ou un halogène, et dans laquelle R⁵ et R⁶ représentent indépendamment l'un de l'autre l'hydrogène, un groupe alkyle en C₁₋₄, un groupe alcoxy en C₁₋₄, un groupe phényle ou un halogène, les films coulés de polyarylate étant fabriqués à partir de solutions de polyarylate à couler qui contiennent
(i) un tensioactif de polyol non ionique sélectionné dans le groupe composé du poly(éthylèneglycol), du poly(propylèneglycol) et du poly(oxyde de tétraméthylène) en tant qu'homopolymères, copolymères ou en tant que mélange de ceux-ci, sous la forme d'un mélange avec un colorant
ou
(ii) un tensioactif de polyol non ionique tel que venant d'être défini,
où les tensioactifs de polyol non ioniques et les colorants peuvent respectivement comporter d'autres additif.

2. Membranes embouties selon la revendication 1, **caractérisées en ce que** R¹ = R² et R³ = R⁴ et représentent respectivement indépendamment les uns des autres l'hydrogène ou un groupe alkyle en C₁₋₄.

3. Membranes embouties selon la revendication 2, **caractérisées en ce que** R¹ = R² = R³ = R⁴ et représentent l'hydrogène ou un groupe alkyle en C₁₋₄.

4. Membranes embouties selon au moins l'une des revendications 1 à 3, **caractérisées en ce que** R⁵ et R⁶ représentent respectivement indépendamment l'un de l'autre un groupe alkyle en C₁₋₄.

5. Membranes embouties selon au moins l'une des revendications 1 à 4 ayant une épaisseur comprise entre 5 et 100 µm.

6. Membrane emboutie selon la revendication 1, dans laquelle le colorant est « C.I. Solvent Yellow 93 », « C.I. Solvent Yellow 16 » ou « C.I. Solvent Orange 107 ».

7. Membrane emboutie selon la revendication 1, dans laquelle le tensioactif de polyol non ionique est utilisé en tant que copolymère séquencé de polyéthylèneglycol-polypropylèneglycol.

8. Utilisation des membranes embouties selon les revendications 1 à 7 en tant que membranes pour transducteur acoustique, pour des applications acoustiques en tant que membranes de microphone et/ou de haut-parleur.

9. Utilisation selon la revendication 8 dans des microphones téléphoniques, des téléphones mobiles, des postes mains libres, des appareils radio, des casques radio, des récepteurs de poche, des ordinateurs, des assistants numériques et/ou des émetteurs de signaux.

10. Films coulés de polyarylate composés de polyarylate de formule (I) tel que défini à la revendication 1, qui sont fabriqués à partir de solutions de polyarylate à couler qui contiennent
(i) un tensioactif de polyol non ionique sélectionné dans le groupe composé du poly(éthylèneglycol), du poly(propylèneglycol) et du poly(oxyde de tétraméthylène) en tant qu'homopolymères, copolymères ou en tant que mélange de ceux-ci, sous la forme d'un mélange avec un colorant
ou
(ii) un tensioactif de polyol non ionique tel que venant d'être défini.

11. Films de polyarylate coulés selon la revendication 10, **caractérisés en ce que** sont prévus en tant que tensioactif de polyol non ionique un copolymère séquencé de polyéthylèneglycol-polypropylèneglycol et en tant que colorant « C.I. Solvent Yellow 93 », « C.I. Solvent Yellow 16 » ou « C.I. Solvent Orange 107 ».

12. Procédé de fabrication de membranes embouties selon les revendications 1 à 7 à partir de films de polyarylate coulés selon les revendications 10 ou 11, **caractérisé en ce que** les films de polyarylate coulés, éventuellement suite à une pré-confection comme un bobinage-coupage, sont chauffés par irradiation avec une lumière infrarouge, puis déformés en membranes par emboutissage et éventuellement ensuite préparés.

13. Procédé de fabrication de films de polyarylate coulés selon les revendications 10 et 11, **caractérisé en ce que** des solutions de polyarylate à couler, qui contiennent (i) un tensioactif de polyol non ionique sélectionné dans le groupe composé du poly(éthylèneglycol), du poly(propylèneglycol) et du poly(oxyde de tétraméthylène) en tant qu'homopolymères, copolymères ou en tant que mélange de ceux-ci, sous la forme d'un mélange avec un colorant, ou (ii) un tensioactif de polyol non ionique tel que venant d'être défini, sont appliquées sur un support, sont détachées de ce support suite à une durée de pré-séchage et sont ensuite entièrement séchées.

14. Procédé selon la revendication 13, **caractérisé en ce que** les solutions de polyarylate à couler sont appliquées sur un support sans fin, comme un feuillard d'acier poli d'un côté ou à l'aspect mat ou un cylindre d'acier spécial poli ou à l'aspect mat d'une étendue de 5 à 25 m.

15. Procédé selon l'une des revendications 13 et 14, **caractérisé en ce que** les solutions de polyarylate à couler sont appliquées sur un film intermédiaire guidé sur le support et sont détachées de ce support avec le film intermédiaire suite à une durée de pré-séchage, puis sont ensuite entièrement séchées.

16. Procédé selon la revendication 15, **caractérisé en ce que** l'on utilise en tant que film intermédiaire un film de téréphtalate de polyéthylène.

17. Procédé selon au moins l'une des revendications 13 à 16, **caractérisé en ce que** les films de polyarylate coulés entièrement séchés présentent une épaisseur moyenne de 5 à 100 µm.

18. Procédé selon au moins l'une des revendications 13 à 17, **caractérisé en ce que** les films de polyarylate coulés sont en outre revêtus par application de solution ou stratification.
